# FASCICULE DE BREVET EUROPEEN

(11) **EP 0 484 277 B1**
(45) Date de publication et mention de la délivrance du brevet: **18.10.1995**
(21) Numéro de dépôt: 91810816.8
(22) Date de dépôt: 23.10.1991
(51) Int. Cl.: A47J 31/40

(54) **Machine automatique pour la préparation d'infusions de café et procédé de mise en action**
Automat zum Bereiten von Kaffeegetränken und Verfahren zur Durchführung dieser Bereitung
Automatic machine for preparing coffee infusions and method for performing the same

(30) Priorité: 25.10.1990 CH 3417/90
(43) Date de publication de la demande: 06.05.1992
(73) Titulaire: Armellin Bucovineanu, Dominique, 1007 Lausanne (CH)
(72) Inventeur: Armellin Bucovineanu, Dominique, 1007 Lausanne (CH)
(74) Mandataire: Kiliaridis, Constantin

(56) Documents cités:
- EP-A- 0 202 517
- EP-A- 0 299 399
- DE-A- 2 006 930
- FR-A- 2 347 911
- US-A- 3 064 553

## Description

La présente invention concerne une machine automatique pour la préparation d'infusions de café, notamment du type expresso, comprenant essentiellement au moins un premier groupe formé d'un piston dont la tête est munie d'un joint d'étanchéité annulaire et d'une chambre cylindrique munie d'une ouverture latérale pour l'alimentation en café moulu disposés horizontalement, des moyens d'alimentation dudit premier groupe en café moulu et en eau chaude sous pression, des moyens de mise en action et d'arrêt automatiques dudit premier groupe et de ses moyens d'alimentation. L'invention concerne également un procédé de mise en action de la machine.

Des machines automatiques pour la confection d'une infusion de café sont de deux types :
les machines utilisant du café soluble, c'est-à-dire que lorsqu'on appuie sur un bouton un gobelet, en principe en plastique, sort de la machine avec une quantité de café soluble et ensuite vient s'ajouter de l'eau chaude ou de l'eau chaude avec du lait;
les machines qui préparent une infusion de café du type expresso apparues depuis quelques années; dans ces machines, une quantité de café moulu doit être comprimée et infusée pour obtenir un café de la qualité expresso.

Ces dernières machines font l'objet de la présente invention.

Ces machines sont confrontées à un certain nombre de problèmes pour permettre d'obtenir une bonne qualité d'infusions de café du type expresso. En effet, pour que l'arôme du café soit conservé, il faut que le café soit fraichement moulu. Ce problème est en tout cas partiellement résolu par l'utilisation du moulin automatique intégré à une telle machine qui permet de moudre le café au moment où l'on appuie sur le bouton pour obtenir l'infusion ou entre la préparation de deux cafés pour avoir une dose de café moulu en réserve afin d'accélérer le processus de la confection de l'infusion de café.

Un deuxième problème est de compacter la poudre de café avant de l'infuser. Ce problème est résolu par l'utilisation comme dans les premières machines manuelles du type expresso d'un groupe formé d'un piston et d'une chambre cylindrique à l'intérieur de laquelle le café moulu est introduit. Là aussi, la disposition et la construction de la chambre cylindrique et du piston sont importantes car après la confection du café, il faut que le marc du café puisse être éjecté.

Un autre problème est celui de la confection de deux infusions de café simultanément. La plupart des machines résolvent ce type de problème en augmentant la quantité de café et d'eau introduites dans la chambre. Néanmoins, cette solution n'est pas optimale car il a été prouvé que la qualité de l'infusion de café est optimum lorsque l'épaisseur du café compacté a une grandeur prédéterminée. Le fait d'augmenter cette épaisseur pour pouvoir obtenir deux infusions de café a une influence négative sur le goût du café.

Enfin, un troisième problème est que certains utilisateurs désirent une infusion de café avec un minimum de liquide et d'autres veulent avoir plus de liquide. Ce problème est résolu par la plupart des fabricants en proposant sur leurs machines deux ou trois touches qui correspondent à des quantités d'eau différentes, cette eau passant sous pression à travers le café comprimé. Là aussi, cette solution n'est pas optimale car il a été prouvé que pour obtenir le meilleur goût d'un café, une quantité optimale d'eau doit infuser à travers une quantité donnée de café et si on va au-delà, on fait sortir d'autres composants du café comme le tanin, etc. qui altèrent le goût et qui rendent également l'opération de la confection de l'infusion plus longue.

Dans certaines de ces machines, l'alimentation de la chambre cylindrique avec du café moulu se fait par une ouverture latérale de la chambre. Le piston avec son joint d'étanchéité, qui est en contact étroit et étanche avec la paroi intérieure de la chambre, à l'endroit de l'ouverture pour l'entrée du café n'est plus en contact sur une partie de sa périphérie avec la paroi, ce qui permet au joint de se détendre et par conséquent les lèvres de l'ouverture blessent le joint, lors de son passage en avant et en arrière. Le remplacement du joint après une relativement courte utilisation est nécessaire.

Dans le EP-A-0 299 399, on décrit une machine dont la chambre et un premier piston se déplacent horizontalement, vers un second piston opposé au premier. La chambre est munie d'une ouverture latérale pour l'alimentation en café moulu. Lors du déplacement de la chambre, le joint d'étanchéité du second piston n'est pas protégé par rapport à l'ouverture latérale. La présente invention a pour but de proposer une machine automatique pour la préparation d'infusions de café permettant de pallier les inconvénients susmentionnés.

La machine automatique selon l'invention est caractérisée par le fait que le piston est fixe, que la chambre est mobile et formée de deux parties cylindriques juxtaposées dont la première partie abritant en position de repos la tête du piston abrite une douille libre dont le diamètre intérieur est égal au diamètre intérieur de la seconde partie et dont la longueur est inférieure à la longueur de la première partie, que la seconde partie de la chambre cylindrique présente un diamètre intérieur inférieur au diamètre extérieur du joint d'étanchéité permettant un glissement étanche entre le piston et la seconde partie de la chambre, que la première partie est munie de l'ouverture latérale pour l'alimentation en café moulu, ladite ouverture étant située sur la moitié de la première partie proche de la seconde partie.

Les avantages de la machine selon l'invention sont les suivants : le fait que le piston est fixe et la chambre mobile et notamment la chambre en deux parties a pour but de permettre une éjection facile du marc de café après la confection de l'infusion. D'autre part, la douille se trouvant dans la première partie permet de protéger le joint d'étanchéité de la tête du piston lors du passage du piston devant l'ouverture pour l'entrée du café. En effet, cette douille étant libre en déplacement dans la première partie et son diamètre intérieur étant inférieur au diamètre extérieur du joint d'étanchéité lorsque la chambre vient contre le piston, la douille entoure le piston jusqu'à l'épaulement créé entre la première et la seconde partie de la chambre. De cette manière, le joint d'étanchéité est protégé et ne vient pas se frotter contre les lèvres de l'ouverture pour l'alimentation en café moulu et, d'autre part, le joint n'est pas sali par les éventuels grains de café qui peuvent subsister ou tomber de la sortie du moulin à café.

Selon une variante d'exécution, la machine à café est équipée d'un deuxième groupe formé d'un piston et d'une chambre cylindrique dont le diamètre est supérieur à celui du premier dans le but de permettre la confection simultanée de deux infusions de café en conservant l'épaisseur de la pastille de marc de café identique à celle du premier groupe tout en ayant au moins approximativement le double volume.

Selon une variante préférée, le filtre, disposé dans la seconde partie de la chambre contre lequel est pressé le café moulu et à travers lequel passe l'infusion, est muni d'une tige de guidage parallèle à l'axe de la chambre et traversant un bouchon fixé contre l'extrémité en aval de la chambre. Un ressort est disposé entre le bouchon et le filtre tendant à rappeler le filtre vers l'intérieur de la chambre. La disposition du ressort entre le filtre et le bouchon permet d'assurer, lors de la compression du marc de café, une pression quasi constante même si l'épaisseur de la pastille de café est modifiée pour tenir compte, par exemple, des conditions atmosphériques ou de la qualité du café, etc.

Au moyen d'une butée fin de course, le filtre avec la tige de guidage est utilisé pour l'expulsion du marc de café après la confection de l'infusion.

Selon une variante préférée, la machine à café est équipée d'un dispositif permettant l'adjonction d'eau chaude en quantité réglable à la sortie de l'infusion afin d'augmenter la quantité du liquide se trouvant dans la tasse sans que cette eau supplémentaire passe à travers la poudre de café comprimée qui aurait pour effet de sortir d'autres substances telles que le tanin, etc altérant le goût du café.

La présente invention concerne également un procédé de mise en action de la machine à café tel que défini par la revendication 6.

Une caractéristique très importante de cette mise en action est celle consistant avant de comprimer complètement le café dans la chambre cylindrique de le mouiller par de l'eau chaude sous la pression normale du réseau d'alimentation en eau, afin que le café soit bien mouillé et ensuite de comprimer le café et le soumettre au passage de l'eau chaude sous une pression beaucoup plus élevée. De cette manière, on arrive à tirer un maximum d'arôme et de goût d'une quantité de café moulu.

L'invention sera décrite plus en détail à l'aide du dessin annexé.

La figure 1 est une vue en coupe axiale du piston.

Les figures 2 et 3 sont des vues en coupe axiale de deux parties de la chambre cylindrique.

La figure 4 est une vue en coupe du groupe piston-chambre cylindrique, la chambre étant en fin de course en position de confection de l'infusion.

La figure 5 est une vue en coupe axiale du groupe piston-chambre cylindrique en position de repos, c'est-à-dire en attente pour le commencement du cycle de la préparation d'une infusion de café.

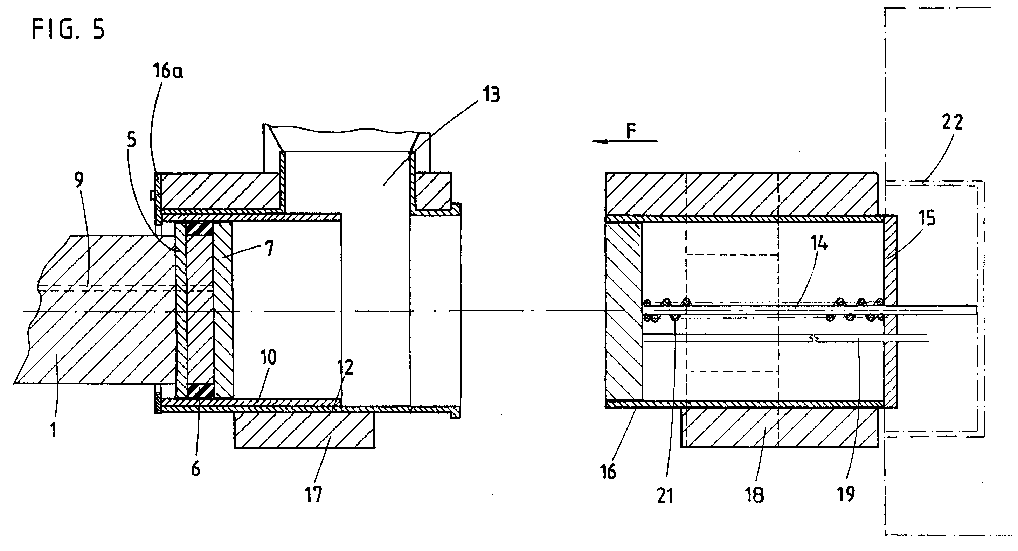

La machine automatique pour la préparation d'infusions de café est abritée dans un châssis, non représenté sur le dessin, et elle est équipée de deux groupes piston-chambre cylindrique dont un seul sera décrit par la suite. Un est destiné à la préparation d'une tasse d'infusion de café, tandis que le deuxième est destiné à la préparation de deux tasses d'infusions de café simultanément. Le châssis abrite également un moulin électrique pour moudre le café et alimenter chacune des chambres cylindriques de deux groupes. Un tel moulin peut avantageusement être le moulin faisant l'objet du brevet suisse du même déposant portant le N° 682 044. Bien entendu, tout autre moulin à café peut remplir le rôle d'alimentation en café. La machine est munie également d'une pompe pour l'envoi de l'eau chaude sous pression comme on le verra par la suite, ainsi que d'un groupe de chauffage pour amener l'eau du réseau à la température nécessaire à l'infusion de café. Différents dispositifs électroniques connus en soi sont utilisés pour régler :
la quantité de café moulu nécessaire pour une ou deux doses;
la quantité d'eau chaude destinée à traverser le café compacté à l'intérieur de la chambre cylindrique;
pour commander le déplacement et l'arrêt successif de la chambre cylindrique, ainsi qu'un moyen assurant que le marc de café éjecté à la fin de la préparation d'une infusion ne reste pas entre les deux parties de la chambre (fig. 5).

Le panneau de commande pour l'utilisateur de la machine comprend trois boutons par groupe piston-chambre cylindrique, un bouton pour la sortie d'un café court, un bouton pour la sortie d'un café moyen et un pour un café long. Pour le deuxième groupe, on a un bouton pour la sortie de deux cafés courts, respectivement moyens et longs. Nous expliquerons ultérieurment de quelle manière on obtient les cafés dit moyens et longs. Et enfin une troisième série de trois boutons permet de commander la mise en marche des deux groupes pour la confection de trois cafés simultanément.

Nous allons maintenant décrire les différents éléments d'un groupe formé d'un piston et d'une chambre cylindrique.

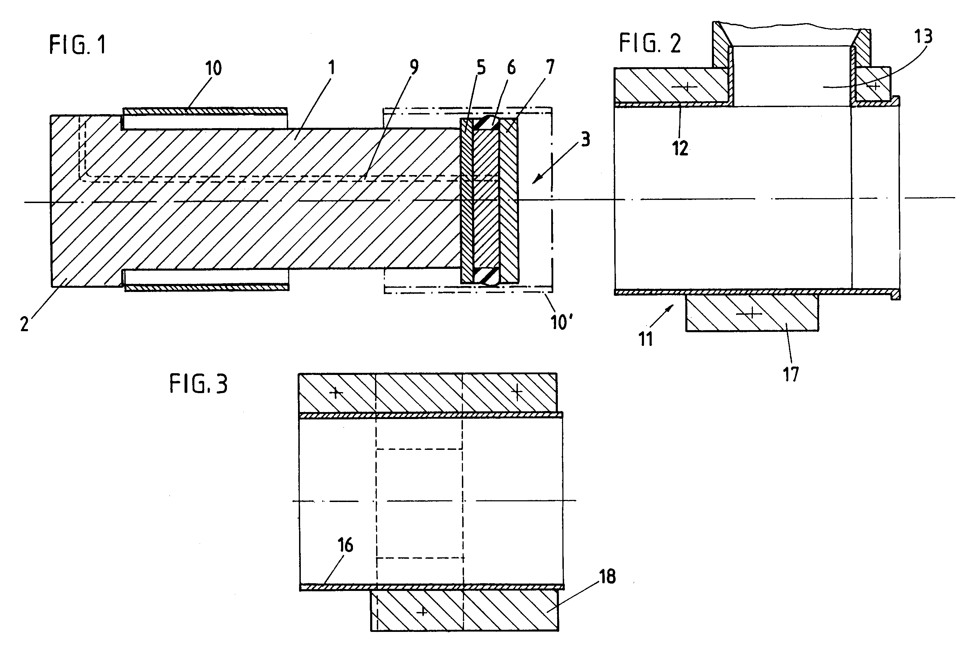

A la figure 1, nous avons représenté un piston 1 qui sera fixé contre l'armature de l'ensemble formé par les deux groupes et le moulin de la machine, par sa partie postérieure 2 au moyen de vis ou moyens similaires. La partie antérieure du piston se termine par une tête 3, laquelle dans le cas présent est formée par une bague 5 de diamètre supérieur au principal corps du piston 1 suivie d'une garniture d'étanchéité 6 et en dernier par une pièce annulaire 7 entourant un filtre ayant la forme d'une grille de douche à travers laquelle s'écoulera l'eau chaude amenée par un conduit 9 traversant le corps du piston 1 et qui est relié à l'alimentation en eau chaude de la machine. Autour du piston 1, se trouve une douille 10 libre et dont le diamètre intérieur est égal, voire légèrement inférieur au diamètre extérieur du joint d'étanchéité 6 afin qu'il y ait un contact étanche avec la douille 10, comme représentée en traits mixtes et référencée 10'.

Aux figures 2 et 3, nous avons représenté la chambre cylindrique qui est formée de deux parties. Une première partie 11 formée d'une pièce cylindrique 12, dont le diamètre est légègement supérieur au diamètre extérieur de la douille 10 et est munie d'une ouverture latérale 13 destinée à l'entrée du café moulu dans la chambre.

La deuxième partie de la chambre cylindrique est formée d'un cylindre 16 dont le diamètre intérieur est inférieur au diamètre extérieur du joint 6. Aussi bien la première partie cylindrique 11 que la deuxième partie sont entourées d'un bloc 17, respectivement 18, fait d'un alliage léger.

Le déplacement de deux parties cylindriques de la chambre est obtenu au moyen d'un vérin, par exemple formé d'une vis sans fin agissant sur un ou plusieurs écrous solidaires du bloc 17. Une tige solidaire du bloc 16 glisse dans un logement du bloc 18 et elle est munie d'une tête, à l'extrémité se trouvant dans ce logement pour pouvoir ramener la première partie à sa position de départ lors du retour de la seconde partie 16. Tout autre moyen, bien entendu, peut être utilisé dans l'esprit de la présente invention. Le but des blocs entourant les parties cylindriques des chambres est également de permettre de conserver lesdites chambres à une température supérieure à la température ambiante afin que lors de l'écoulement de l'infusion de café, le liquide ne se refroidisse pas, des moyens de chauffage étant prévus à cet effet.

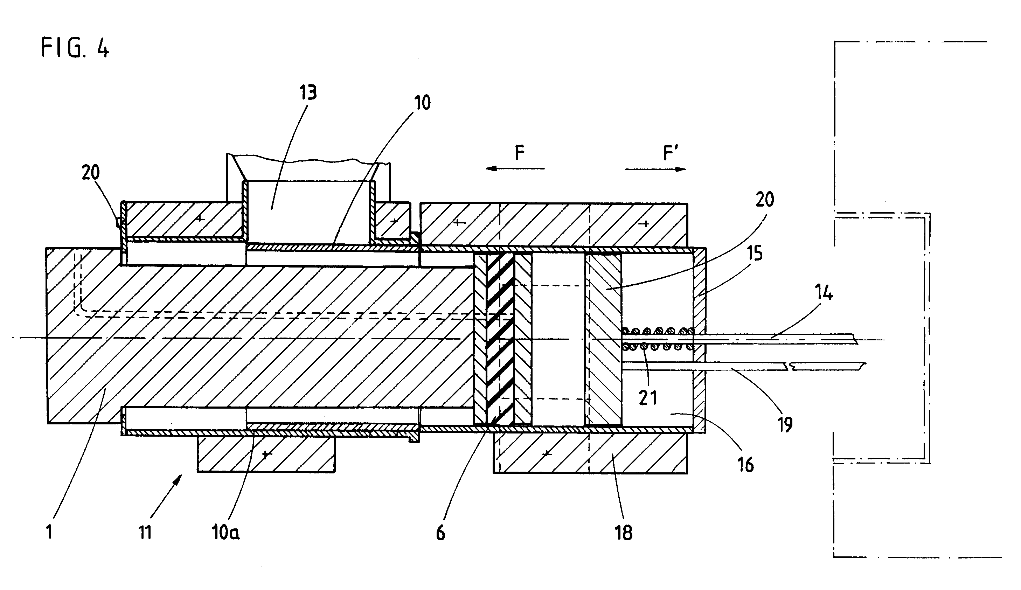

A la figure 4 nous avons représenté le groupe du piston 1 et de la chambre cylindrique formée de deux parties 11 et 16 en position fermée, c'est-à-dire en position de confection d'une infusion de café. On distingue la douille 10 qui ferme l'ouverture 13 pour l'entrée du café de la première partie 11 de la chambre cylindrique. La tète du piston se trouve à l'intérieur de la seconde partie de la chambre cylindrique et compresse le café moulu contre un filtre 20 relié par un conduit 19 à l'extérieur de la machine pour l'écoulement de l'infusion. Une tige de guidage 14 est solidaire du filtre 20 et traverse un bouchon 15 fermant l'extrémité et la seconde partie 16. Un ressort 21 s'appuyant contre le bouchon 15 et le filtre 20 rappelle ce dernier vers l'intérieur de la chambre. Une butée 22 de fin de course et solidaire de l'armature de la machine permet de bloquer, lors du retour de la partie 16, le filtre 20 en une position précise, ce qui permet l'éjection du marc de café infusé pendant le recul complet de la partie 16 (fig. 5).

Un élément relativement important de la présente invention est la douille 10 dont l'existence permet de protéger le joint d'étanchéité 6 de la tête du piston lors du passage de la tête du piston au-dessous de l'ouverture 13 de la chambre cylindrique. En effet, lors du passage de la tête à l'endroit de l'ouverture 13, le joint d'étanchéité 6 en frottant contre les lèvres de l'ouverture 13 pourrait être déchiré, voire sali par des grains de café, d'autant plus que la partie du joint qui n'est plus en contact avec la chambre se détend dans ladite ouverture 13.

En position de départ (v. fig. 5), c'est-à-dire lorsque la chambre se trouve complètement à droite de la figure la tête 3, et notamment le joint 6, se trouve à l'intérieur de la douille 10 et tout déplacement de la partie 11 de la chambre cylindrique par rapport à la tête du piston 3 laisse libre la douille 10 de couvrir la tête du piston et ceci jusqu'à ce que la seconde partie 16 de la chambre cylindrique, dont le diamètre intérieur est égal à celui de la douille, vient buter contre la douille 10. A partir de ce moment là, le déplacement de la chambre selon la flèche F a pour effet d'entraîner la douille 10 dans le sens F et de la faire glisser sur le joint 6 permettant au joint d'étanchéité 6 d'entrer en contact étroit avec l'intérieur de la deuxième partie cylindrique 16 pour comprimer de manière étanche le café moulu.

A l'aide de la figure 5 nous allons expliquer le fonctionnement de la machine à café en relation avec le groupe formé du piston et de la chambre cylindrique. Cette explication permettra également de décrire le procédé de mise en action de la machine.

En position de repos le piston 1 et les deux parties 11 et 16 de la chambre cylindrique occupent la position telle qu'elle est représentée à la figure 5. Lorsqu'on appuie sur le bouton de mise en marche demandant la confection d'une infusion de café. La seconde partie 16 de la chambre avance jusqu'à entrer en contact avec la première partie 11 de la chambre cylindrique. A ce moment là, le café moulu tombe par l'orifice 13 dans la chambre envoyé par le moulin à café et son distributeur se trouvant au-dessus ou tout autre réservoir prévu à cet effet. Après que le café soit tombé et, en principe deux secondes après le premier arrêt de la seconde partie de la chambre, les deux parties de la chambre se déplacent vers le piston 1, ce qui provoque la fermeture de l'ouverture 13 par la douille 10, comme représenté à la figure 4. Le déplacement continue jusqu'à une position de 6 ou 7 mm avant la compression complète du café et le tout s'arrête pour une durée d'environ de trois secondes. Pendant ce temps une petite quantité d'eau chaude sous la pression du réseau d'alimentation normale est envoyée à travers le conduit 9 pour mouiller le café non comprimé complètement afin que l'on puisse extraire le maximum d'arôme par la suite.

Après avoir mouillé le café pendant une durée d'environ 3 secondes l'arrivée d'eau est arrêtée et les deux parties de la chambre se déplacent encore de quelques milimètres afin de comprimer au maximum la pastille de café entre la tête 3 du piston et le filtre 20. A ce moment là de l'eau chaude sous pression fournie par l'électro-pompe de la machine est envoyée à travers le même conduit 9 pour la confection de l'infusion qui s'écoule à travers le canal 19 vers l'extérieur de la machine. Lorsque la quantité d'eau préréglée et qui est optimisée lors de la mise en marche de la machine est effectuée, les deux parties de la chambre reviennent en leur position de départ comme celle représentée à la figure 5. Lors du recul de la partie 16, la partie 11 et le bloc 17 suivent, entraînés par la tige (non représentée) glissant dans le logement du bloc 18, lorsque la tête de la tige vient en contact avec l'extrémité dudit logement. Lorsque la tige 14 solidaire du filtre 20 vient buter contre la butée 22, le processus de l'éjection du marc de café débute pendant que la partie 16 continue à reculer. Lorsque le filtre 20 arrive à la position représentée à la figure 5, le marc tombe par gravité dans un bac adéquat. Pour s'assurer que la pastille du marc de café ne reste pas collée contre le filtre 20, un doigt (non représenté) passe devant l'extrémité de la partie 16 pour pousser le marc qui serait resté collé.

Lors du recul de la chambre et lorsque la seconde partie 16 de la chambre quitte la tête 3 du piston et plus précisément le joint d'étanchéité 6, il y a un contact avec le bord de la douille 10 et un arrêt 16a formé d'une bague ou autre moyen, fixée contre la première partie 16 de la chambre (fig. 5) . A partir de ce moment là, la douille 10 est entraînée avec la chambre dans la direction F', ce qui a pour effet de forcer la douille 10, d'entourer la tête de piston jusqu'à ce que la bague 5 de ce piston vienne en contact avec l'arrêt 16a qui correspond à la fin du trajet de retour des deux parties de chambre.

Il est important de souligner ici que pour la confection de deux tasses de café simultanément et étant donné que l'épaisseur de la pastille de café moulu ne doit pas être supérieure à une grandeur prédéterminée, l'inventeur à choisi d'augmenter le diamètre de la pastille en prévoyant un deuxième groupe piston-chambre cylindrique de la même conception que celui décrit ici, mais de diamètre supérieur, afin de permettre la confection simultanée de deux infusions qui vont couler à partir d'un double canal dans deux tasses.

Il a été prouvé que pour obtenir la meilleure qualité pour une quantité de café donnée, une certaine quantité d'eau maximum doit passer à travers le café comprimé. Toute quantité supplémentaire n'a pour effet que sortir des substances nocives et altérant le goût du café tel que le tanin. Pour cette raison, l'inventeur a prévu un dispositif qui ajoute de l'eau chaude à la sortie du canal 19 pour les cafés dits "moyen" et "long". Ainsi, lorsque quelqu'un veut obtenir un café avec plus de liquide, il actionne le bouton correspondant et pendant que l'électropompe envoie, à la dernière phase de la confection de l'infusion, de l'eau chaude sous pression dont la quantité est toujours la même pour une quantité de café moulu, de l'eau chaude supplémentaire s'écoule à proximité du canal de sortie de l'infusion ce qui, d'une part, satisfait le consommateur puisqu'il obtient un café avec plus de liquide et, d'autre part, n'altère pas le goût du café puisque la quantité d'eau optimale a été utilisée pour la confection de l'infusion.

Il est à souligner que le ressort 21 permet d'assurer que la pression exercée sur le café moulu est toujours constante même s'il y a une modification de la quantité de café moulu, modification rendue nécessaire pour tenir compte des conditions météorologiques, de la qualité du café, etc.

## Revendications

1. Machine automatique pour la préparation d'infusions de café, notamment du type expresso, comprenant essentiellement au moins un premier groupe formé d'un piston (1) dont la tête (5, 7) est munie d'un joint d'étanchéité annulaire (6) et d'une chambre cylindrique (12, 16) munie d'une ouverture latérale (13) pour l'alimentation en café moulu disposés horizontalement, des moyens d'alimentation dudit premier groupe en café moulu et en eau chaude sous pression, des moyens de mise en action et d'arrêt automatiques dudit premier groupe et de ses moyens d'alimentation, caractérisée par le fait que le piston (1) est fixe, que la chambre (12, 16) est mobile et formée de deux parties cylindriques juxtaposées (12, 16), dont la première partie (11, 12) abritant en position de repos la tête (5, 6, 7) du piston (1) abrite une douille (10) libre dont le diamètre intérieur est égal au diamètre intérieur de la seconde partie (16) et dont la longueur est inférieure à la longueur de la première partie (11, 12), que la seconde partie (16) de la chambre cylindrique présente un diamètre intérieur inférieur au diamètre extérieur du joint (6) d'étanchéité permettant un glissement étanche entre le piston (1) et la seconde partie (16) de la chambre, que la première partie (11, 12) est munie de l'ouverture latérale (13) pour l'alimentation en café moulu, ladite ouverture étant située sur la moitié de la première partie proche de la seconde partie (16).

2. Machine selon la revendication 1, caractérisée par le fait qu'elle est munie d'un vérin pour assurer le déplacement de la chambre cylindrique.

3. Machine selon l'une des revendications 1 ou 2, caractérisée par le fait que la machine comprend un deuxième groupe formé d'un piston et d'une chambre cylindrique destinés à la confection des deux infusions à la fois, le diamètre de ladite chambre étant supérieur à celui du premier groupe destiné à la confection d'une seule infusion à la fois, de sorte que le volume intérieur soit au moins approximativement le double de la chambre destinée à la confection d'une seule infusion pour une même longueur.

4. Machine selon l'une des revendications 1 à 3, caractérisée par le fait que la seconde partie (16) de la chambre abrite le filtre (20) à travers lequel l'infusion de café passe avant d'arriver dans un conduit de sortie (19), ledit filtre (20) étant solidaire d'une tige de guidage (14) parallèle à l'axe de la chambre, traversant un bouchon (15) fixé contre l'extrémité en aval de ladite seconde partie (16), que des moyens élastiques (21) sont disposés entre ledit filtre (20) et ledit bouchon (15) tendant à rappeler le filtre (20) vers l'autre extrémité de la chambre (16), que des moyens de butée sont prévus sur la machine pour bloquer ledit filtre (20) dans une position déterminée tout en autorisant le déplacement de la seconde partie (16) de la chambre assurant ainsi l'éjection du marc après la confection de l'infusion.

5. Machine selon l'une des revendications 1 à 4, caractérisée par le fait qu'elle est équipée d'un dispositif d'adjonction d'une quantité réglable d'eau chaude à la sortie de l'infusion, de sorte que la quantité d'eau traversant le café moulu soit toujours la même et optimum indépendamment de la quantité de liquide désirée par l'utilisateur.

6. Procédé de mise en action de la machine telle que définie par l'une des revendications 1 à 5, à partir de la position de repos, la tête (5, 6, 7) du piston (1) se trouvant à l'intérieur de la première partie (11, 12) de la chambre cylindrique et notamment à l'intérieur de la douille (10), la seconde partie (16) de la chambre cylindrique étant espacée axialement de la première partie pour permettre l'éjection du marc de café fait précédemment, caractérisé en ce qu'en appuyant sur un bouton, les actions suivants sont réalisées successivement :
- avancement de la seconde partie (16) de la chambre jusqu'à ce qu'elle soit en contact avec la première partie (11, 12)
- alimentation de la chambre par l'ouverture latérale (13) avec du café moulu,
- déplacement de deux parties (11, 12; 16) de la chambre vers le piston (1) jusqu'à la formation d'une pastille cylindrique avec du café moulu, mais non compacté complètement, la tête du piston (5, 6, 7), et notamment le joint (6), étant protégée par la douille (10) lors de son déplacement dans la première partie (11, 12) évitant que le joint (6) soit sali par les éventuels grains de poudre de café et évitant le contact direct du joint avec la paroi cylindrique (12) de la première partie, notamment dans la zone avec l'ouverture pour le passage du café moulu,
- envoi d'une quantité d'eau chaude sous la pression du réseau d'alimentation pour permettre de mouiller le café,
- déplacement de la chambre (11, 12; 16) vers le piston (1) pour comprimer complètement la quantité de café mouillé,
- envoi sous pression de la quantité d'eau nécessaire pour la production d'une infusion,
- après l'écoulement de l'infusion, déplacement de la chambre (11, 12; 16) en sens inverse (F') pour revenir à la position de repos et permettre l'éjection du marc de café en fin du parcours.

7. Procédé de mise en action selon la revendication 6, caractérisé par le fait que lorsqu' une infusion avec une quantité de liquide supérieure à la quantité optimum est désirée en même temps que l'envoi de l'eau chaude sous pression une quantité préréglée d'eau chaude est envoyée à la sortie de l'infusion.

## Claims

1. Automatic machine for the preparation of infusions of coffee, particularly of the expresso type, comprising essentially at least one unit formed by a piston (1) the head of which is fitted with an annular seal (6) and by a cylindrical chamber (12, 16) provided with a lateral opening (13) for supplying ground coffee horizontally arranged, means for supplying the first unit (1) with ground coffee and with hot water under pressure, means for the automatic starting and stopping of said first unit and its means of supply, characterized in that the piston (1) is fixed, that the chamber (12, 16) is movable and formed by two juxtaposed cylindrical parts (12, 16), the first part (11, 12) of which housing in rest position the head (5, 6, 7) of the piston (1) houses a free sleeve (10) the inner diameter of which is equal to the inner diameter of the second part (16) and the length of which is smaller than the length of the first part (11, 12), in that the second part (16) of the cylindrical chamber has an inner diameter smaller than the outer diameter of the seal (6) permitting a sealed sliding between the piston (1) and the second part (16) of the chamber, in that the first part (11, 12) is provided with the lateral opening (13) for supplying ground coffee, said opening being situated in the half of the first part close to the second part (16).

2. Machine according to claim 1, characterized by the fact that it is fitted with a jack for moving the cylindrical chamber.

3. Machine according to one of claims 1 or 2, characterized by the fact that the machine comprises a second unit formed by a piston and by a cylindrical chamber adapted to the making of the two infusions at a time, the diameter of said chamber being greater than that of the first unit adapted to the making of a single infusion at a time, so that the internal volume is at least approximately twice that of the chamber adapted to the making of a single infusion for the same length.

4. Machine according to one of claims 1 to 3, characterized by the fact that the second part (16) of the chamber houses the filter (20) through which the infusion of coffee passes before arriving in an outlet duct (19), said filter (20) being securely attached to a guide rod (14) parallel to the axis of the chamber, passing through a plug (15) fixed against the downstream end of said second part (16), that resilient means (21) are arranged between said filter and said plug (15) tending to return the filter (20) towards the other end of the chamber (16), that stopping means are provided on the machine so as to block said filter (20) in a determined position while allowing the movement of the second part (16) of the chamber thus ensuring the discharge of the grounds after making of the infusion.

5. Machine according to one of claims 1 to 4, characterized by the fact that it is fitted with a device for adding an adjustable quantity of hot water at the outlet of the infusion, so that the quantity of water passing through the ground coffee is always the same and optimum independently of the quantity of liquid desired by the user.

6. Process for operation of the machine as defined by one of claims 1 to 5, starting from the rest position, the head (5, 6, 7) of the piston being situated inside the first part (11, 12) of the cylindrical chamber and particularly inside the sleeve (10), the second part (16) of the cylindrical chamber being spaced axially apart from the first part so as to permit the discharge of the grounds of coffee made previously, characterized in that by pressing on a button, the following action are performed in turn :
- forward movement of the second part (16) of the chamber until it is in contact with the first part (11, 12),
- supplying of the chamber through the lateral opening (13) with ground coffee,
- movement of two parts (11, 12; 16) of the chamber towards the piston until a cylindrical pellet is formed with ground, but not fully compacted coffee, the head (5, 6, 7) of the piston, and particularly the seal (6), being protected by the sleeve (10) during its movement in the first part (11, 12) preventing the seal (6) from being soiled by any grains of coffee powder and preventing direct contact of the seal with the cylindrical wall (12) of the first part, particularly in the zone with the opening for the passage of the ground coffee,
- sending of a quantity of hot water under the pressure of the supply system in order to wet the coffee,
- movement of the chamber (11, 12; 16) towards the piston (1) so as to compress fully the quantity of wetted coffee,
- sending under pressure of the quantity of water necessary for the production of an infusion,
- after running off of the infusion, movement of the chamber (11, 12; 16) in the opposite direction (F') so as to return to the rest position and to allow the discharge of the coffee grounds at the end of the travel.

7. Operating process according to claim 6, characterized by the fact that when an infusion with a quantity of liquid greater than the optimum quantity is required, at the same time as the sending of the hot water under pressure a preset quantity of hot water is sent to the outlet of the infusion.

## Patentansprüche

1. Automat zur Zubereitung von Kaffeegetränken, insbesondere vom Typ Expresso, mit hauptsächlich wenigstens einer ersten Gruppe, bestehend aus einem Kolben (1), dessen Kopf (5, 7) mit einem Dichtungsring (6) versehen ist, und aus einer zylindrischen Kammer (12, 16) mit einer seitlichen Oeffnung (13) für die Zufuhr des gemahlenen Kaffees, wobei der Kolben (1) und die Kammer (12, 16) horizontal angeordnet sind, mit Mitteln zum Zuführen von gemahlenem Kaffee und unter Druck stehendem warmem Wasser zur genannten ersten Gruppe, und mit automatischen Mitteln zur Inbetriebsetzung und Ausschaltung der genannten ersten Gruppe und ihrer Zufuhrmittel, dadurch gekennzeichnet, dass der Kolben (1) feststeht, dass die Kammer (12, 16) beweglich ist und aus zwei nebeneinander liegenden zylindrischen Teilen (12, 16) besteht, wobei das erste Teil (11, 12), welches in Ruhestellung den Kopf (5, 6, 7) des Kolbens (1) aufnimmt, eine freie Hülse (10) aufnimmt, deren innerer Durchmesser dem inneren Durchmesser des zweiten Teils (16) entspricht und deren Länge kleiner ist als die Länge des ersten Teils (11, 12), dass das zweite Teil (16) der zylindrischen Kammer einen inneren Durchmesser aufweist, der kleiner ist als der äussere Durchmesser des Dichtungsrings (6), was ein dichtes Gleiten zwischen dem Kolben (1) und dem zweiten Teil (16) der Kammer ermöglicht, und dass das erste Teil (11, 12) mit der seitlichen Oeffnung (13) für die Zufuhr des gemahlenen Kaffees versehen ist, wobei sich die genannte Oeffnung auf der Hälfte des ersten Teils befindet, welches in der Nähe des zweiten Teils (16) liegt.

2. Automat nach Anspruch 1, dadurch gekennzeichnet, dass er mit einem Stellglied versehen ist, das die Bewegung der zylindrischen Kammer gewährleistet.

3. Automat nach einem der Ansprüche 1 oder 2, dadurch gekennzeichnet, dass er mit einer zweiten Gruppe versehen ist, welche aus einem Kolben und einer zylindrischen Kammer besteht, die vorgesehen sind, um gleichzeitig zwei Getränke zu bereiten, wobei der Durchmesser der genannten Kammer grösser ist als der der ersten Gruppe, die dazu vorgesehen ist, ein einziges Getränk auf einmal zu bereiten, so dass das innere Volumen für eine gleiche Länge ungefähr doppelt so gross ist wie das der Kammer, die dazu vorgesehen ist, ein einziges Getränk zu bereiten.

4. Automat nach einem der Ansprüche von 1 bis 3, dadurch gekennzeichnet, dass das zweite Teil (16) der Kammer den Filter (20) enthält, durch welchen das Kaffeegetränk durchfliesst, bevor es in die Ausgangsröhre (19) gelangt, wobei der genannte Filter (20) mit einer Führungsstange (14) fest verbunden ist, welche parallel zur Kammerachse verläuft und einen Verschluss (15) durchsetzt, der am hinteren Ende des genannten zweiten Teils (16) befestigt ist, dass elastische Mittel (21) zwischen dem genannten Filter (20) und dem genannten Verschluss (15) angeordnet sind, um den Filter (20) in Richtung des anderen Endes der Kammer (16) zurückzuschieben, dass Anschlagmittel auf dem Automat vogesehen sind, um den genannten Filter (20) in einer bestimmten Stellung zu blockieren, dabei aber die Bewegung des zweiten Teils (16) der Kammer zu erlauben, wodurch das Ausstossen des Kaffeesatzes nach der Zubereitung des Getränkes gewährleistet ist.

5. Automat nach einem der Ansprüche 1 bis 4, dadurch gekennzeichnet, dass er mit einer Vorrichtung für das Zugeben einer einstellbaren Warmwassermenge am Ausfluss des Getränkes versehen ist, so dass die Wassermenge, die den gemahlenen Kaffee durchfliesst, immer die gleiche und die optimale ist, unabhängig von der Flüssigkeitsmenge, die vom Verbraucher gewünscht wird.

6. Verfahren zum Betrieb des Automaten, wie er durch einen der Ansprüche 1 bis 5 definiert ist, ausgehend von der Ruhestellung, in welcher der Kopf (5, 6, 7) des Kolbens (1) sich in dem ersten Teil (11, 12) der zylindrischen Kammer und insbesondere im Innern der Hülse (10) befindet und das zweite Teil (16) der zylindrischen Kammer axial vom ersten Teil entfernt ist, um das Ausstossen des zuvor benützten Kaffeesatzes zu erlauben, dadurch gekennzeichnet, dass beim Drücken auf eine Taste folgende Funktionen nacheinander durchgeführt werden :
- Vorwärtsbewegung des zweiten Teils (16) der Kammer, bis es mit dem ersten Teil (11, 12) in Berührung kommt,
- Zufuhr von gemahlenem Kaffee in die Kammer durch die seitliche Oeffnung (13),
- Bewegung der zwei Teile (11, 12; 16) der Kammer in Richtung des Kolbens (1), bis eine nicht ganz verdichtete zylindrische Tablette aus gemahlenem Kaffee gebildet wird, wobei der Kolbenkopf (5, 6, 7) und insbesondere die Dichtung (6) während ihrer Bewegung im ersten Teil (11, 12) durch die Hülse (10) geschützt sind, womit verhindert wird, dass die Dichtung (6) durch eventuelle Körner des Kaffeepulvers beschmutzt wird, und womit der direkte Kontakt zwischen Dichtung und zylindrischer Wand (12) des ersten Teils, insbesondere in der Zone mit der Oeffnung für den Durchgang des gemahlenen Kaffees, vermieden wird,
- Beschickung mit einer bestimmten Warmwassermenge unter dem Druck der Wasserleitung, um den Kaffee zu nässen,
- Bewegung der Kammer (11, 12; 16) in Richtung des Kolbens (1), um die nasse Kaffeemenge ganz zusammen zu drücken,
- Beschickung mit der für die Bereitung des Getränkes erforderlichen Menge von unter Druck stehendem Wasser,
- nach Ausfliessen des Getränkes, Bewegung der Kammer (11, 12; 16) in der entgegengesetzten Richtung (F'), damit sie in die Ruhestellung zurückgelangt und um den Ausstoss des Kaffeesatzes am Ende des Durchganges zu erlauben.

7. Verfahren zum Betrieb nach Anspruch 6, dadurch gekennzeichnet, dass gleichzeitig mit der Beschickung von unter Druck stehendem warmem Wasser eine voreingestellte Wassermenge am Ausfluss des Getränkes zugeführt wird, wenn ein Getränk mit einer Flüssigkeitsmenge gewünscht wird, die grösser ist als die optimale Menge.
